# EUROPÄISCHE PATENTSCHRIFT

(11) **EP 0 961 871 B1**
(45) Veröffentlichungstag und Bekanntmachung des Hinweises auf die Patenterteilung: **10.04.2002**
(21) Anmeldenummer: 98906835.8
(22) Anmeldetag: 22.01.1998
(51) Int. Cl.: F01N 3/20, B01D 53/94

(54) **VERFAHREN UND EINRICHTUNG ZUR STEUERUNG EINER VERBRENNUNGSANLAGE UND ZUR KATALYTISCHEN ABGASREINIGUNG SOWIE VERBRENNUNGSANLAGE**
CONTROL METHOD AND DEVICE FOR A COMBUSTION SYSTEM, CATALYTIC PURIFICATION OF EXHAUST GAS FROM A COMBUSTION SYSTEM, AND THE COMBUSTION SYSTEM
PROCEDE ET DISPOSITIF DE COMMANDE D'UNE SYSTEME DE COMBUSTION, EPURATION CATALYTIQUE DES GAZ D'ECHAPPEMENT ET SYSTEME DE COMBUSTION

(30) Priorität: 06.02.1997 DE 19704558
(43) Veröffentlichungstag der Anmeldung: 08.12.1999
(73) Patentinhaber: SIEMENS AKTIENGESELLSCHAFT, 80333 München (DE)
(72) Erfinder: MATHES, Wieland, D-96247 Michelau (DE); DÖLLING, Winfried, D-96369 Weissenbrunn (DE); HOFMANN, Lothar, D-96264 Altenkunstadt (DE)
(86) Internationale Anmeldenummer: DE9800202
(87) Internationale Veröffentlichungsnummer: WO9835143

(56) Entgegenhaltungen:
- EP-B- 0 697 062
- DE-A- 3 721 572
- DE-A- 4 227 741
- DE-C- 19 629 163
- PATENT ABSTRACTS OF JAPAN vol. 095, no. 007, 31.August 1995 & JP 07 103021 A (FUJI HEAVY IND LTD), 18.April 1995,
- PATENT ABSTRACTS OF JAPAN vol. 004, no. 139 (M-034), 30.September 1980 & JP 55 093917 A (UNITIKA LTD), 16.Juli 1980,

## Beschreibung

Die Erfindung bezieht sich auf ein Verfahren und eine Einrichtung zur Steuerung einer Verbrennungsanlage und zur katalytischen Beseitigung eines von der Verbrennungsanlage erzeugten Schadstoffes aus dem Abgas, wobei der Schadstoff mit einem dem Abgas zudosierten Fluid chemisch reagiert, wie es im Dokument JP 07 103 021 A beschrieben wird. Eine solche Reaktion ist beispielsweise die an sogenannten DeNOx-Katalysatoren ablaufende Reaktion von Stickoxiden mit einem Reduktionsmittel wie Ammoniak zu Stickstoff und Wasser. Die Erfindung bezieht sich weiterhin auf eine Verbrennungsanlage, insbesondere einen Verbrennungsmotor, welche bzw. welcher mit einer derartigen Einrichtung ausgerüstet ist.

Bei der Verbrennung eines fossilen Brennstoffs in einer Verbrennungsanlage entstehen in nicht unerheblichem Umfang Schadstoffe wie Stickoxide, Kohlenwasserstoffe, Kohlenmonoxid, Schwefeloxide sowie bei entsprechenden Verbrennungstemperaturen auch Dioxine und Furane, welche über das Abgas der Verbrennungsanlage in die Umwelt gelangen können. Eine derartige Verbrennungsanlage kann z.B: eine Kesselanlage, ein Fossilkraftwerk aber auch ein Verbrennungsmotor sein.

Aufgrund strenger gesetzlicher Vorschriften, welche die Abgabemenge der obengenannten Schadstoffe limitieren, ist für die genannten Verbrennungsanlagen eine zusätzliche Behandlung der Abgase zur Verminderung der darin enthaltenen Schadstoffe erforderlich. Hierzu sind in der Vergangenheit eine Vielzahl von Katalysatoren entwickelt worden. So sind zur Verringerung von Stickoxiden die bereits genannten DeNOx-Katalysatoren bekannt, welche die im Abgas enthaltenen Stickoxide mit einem geeigneten Reduktionsmittel, meist Ammoniak, nach dem Verfahren der selektiven katalytischen Reduktion (SCR) zu umweltfreundlichem Stickstoff und Wasser umsetzen. Das Reduktionsmittel oder eine Vorstufe des Reduktionsmittels, z.B. Harnstoff als Vorstufe des Ammoniaks, wird in Strömungsrichtung des Abgases vor dem Katalysator in das Abgas eingebracht und tritt dann in vorzugsweise homogener Vermischung mit den im Abgas enthaltenen Stickoxiden in den Katalysator ein.

Für die Verringerung der Schadstoffe im Abgas eines Otto-Motors sind beispielsweise edelmetallhaltige Katalysatoren bekannt, an denen Kohlenwasserstoffe und Kohlenmonoxid mit Stickoxiden zu Kohlendioxid, Stickstoff und/oder Wasser umgewandelt werden.

Des weiteren arbeitet man derzeit vielerorts an der Entwicklung eines geregelten Dieselkatalysators, mit dem es möglich sein soll, den Stickoxidgehalt im Abgas eines Dieselmotors erheblich zu senken. Dies ist jedoch aufgrund des hohen Restgehalts an Luftsauerstoff im Abgas nicht mit dem für den Otto-Motor bekannten edelmetallhaltigen Katalysator möglich. Stattdessen kann zur Stickoxidentfernung in dem Abgas eines Dieselmotors der bereits erwähnte DeNOx-Katalysator verwendet werden. Da jedoch ein Dieselmotor, insbesondere bei seinem Einsatz zur Traktion, in der Regel mit variabler Last und Drehzahl betrieben wird, unterliegt die pro Zeiteinheit erzeugte Stickoxidmenge einer Schwankung in weiten Grenzen. Das Gleiche gilt selbstverständlich auch für eine beliebige andere Verbrennungsanlage, die mit wechselnden Betriebszuständen eingesetzt wird.

Um auf der einen Seite eine hohe Abscheiderate der Stickoxide zu erzielen und auf der anderen Seite einen Schlupf des eingebrachten Reduktionsmittels zu verhindern, muß die Dosierung des Reduktionsmittels durch geeignete Maßnahmen entsprechend der Stöchiometrie der Reaktion genau an die erzeugte Menge der Stickoxide angepaßt werden. Erschwerend kommt hinzu, daß das als Reduktionsmittel verwendete Ammoniak giftig ist und bereits bei einer kleinen Konzentration eine erhebliche Geruchsbelästigung für den Menschen darstellt. Auch bei anderen katalytischen Reinigungsverfahren, bei welchen ein Schadstoff als ein erster Reaktant mit einem zusätzlich in das Abgas eingebrachten Fluid als zweiten Reaktanten reagiert, ist eine exakte Dosierung erforderlich.

Eine solche exakte Dosierung des Fluids ist mit einem erheblichen technischen Aufwand verbunden, da neben der Überwachung der erzeugten Schadstoffmenge zusätzlich auch betriebsrelevante Parameter der Verbrennungsanlage, z.B. Temperatur und Last, betriebsrelevante Parameter des Katalysators, z.B. Katalysatortemperatur und Speicherkapazität und Parameter des Abgases, z.B. Druck und Temperatur, berücksichtigt werden müssen. Ein die genannten Parameter berücksichtigendes Verfahren zur gesteuerten Einbringung eines Fluids in ein stickoxidhaltiges Abgas ist aus der EP 0 697 062 B1 bekannt. Nachteiligerweise muß das für die Einbringung des Fluids erforderliche Dosiersystem für einen weiten Durchsatzbereich des Fluids und hochdynamisch ausgelegt sein, um bei jedem Betriebszustand der Verbrennungsanlage einwandfrei zu funktionieren. Ein solches Dosiersystem ist mit hohen Kosten verbunden, da es an die jeweilige Anlage adaptiert werden muß.

Der Erfindung liegt nun die Aufgabe zugrunde, eine gegenüber dem Stand der Technik technisch einfachere und kostengünstigere Lösung für ein Verfahren und eine Einrichtung zur katalytischen Abgasreinigung anzugeben, wobei ein Fluid dem Abgas zudosiert wird. Damit soll eine hohe Abscheiderate des Schadstoffes ohne einen nennenswerten Schlupf des Fluids oder eines Folgeproduktes des Fluids erreicht werden. Ferner ist es Aufgabe der Erfindung, eine mit einer derartigen Einrichtung ausgestattete Verbrennungsanlage anzugeben.

Die Aufgabe bezüglich des Verfahrens wird gelöst durch ein Verfahren zur Steuerung einer Verbrennungsanlage und zur katalytischen Beseitigung eines Schadstoffes aus einem Abgas einer Verbrennungsanlage zur Verbrennung eines Brennstoffes, wobei ein Fluid dem Abgas entsprechend dem Massenstrom des Schadstoffes zudosiert und für die Steuerung der Verbrennung ein Sollwert für den Massenstrom des Schadstoffes vorgegeben wird.

Die Erfindung geht dabei von der Überlegung aus, daß der Massenstrom des bei der Verbrennung entstehenden Schadstoffes in starkem Maße von den bei der Verbrennung herrschenden Bedingungen wie z.B. Druck und Temperatur abhängig ist. Der Massenstrom des Schadstoffes ist dabei definiert als die Durchflußmenge des Schadstoffes pro Zeiteinheit, gemessen in kg/sek. Die Verbrennung kann demnach entsprechend einem vorgegebenen Sollwert für den Massenstrom des Schadstoffes gesteuert werden. Durch eine derartige Steuerung der Verbrennung ist natürlich auch eine Regelung des Massenstromes, d.h. eine Einstellung des Wertes des Massenstromes innerhalb eines gewissen Toleranzbereiches um einen vorgegebenen Sollwert, möglich. Da der Massenstrom auf diese Weise gerade bei wechselnden Betriebszuständen der Verbrennungsanlage nicht mehr in weiten Grenzen variiert, kann die Dosierung des für die katalytische Beseitigung des Schadstoffes in dem Abgas erforderlichen Fluids wesentlich vereinfacht, nämlich nur für einen kleinen Durchsatzbereich des Fluids entsprechend dem Sollwert des Schadstoffmassenstroms ausgelegt und für diesen Bereich optimiert werden. Die hochdynamische Auslegung der Dosiereinrichtung entfällt.

Vorzugsweise kann die Steuerung der Verbrennung durch Einflußnahme auf die der Verbrennung zugeführte Luftmenge und/oder auf die der Verbrennung zugeführte Brennstoffmenge vorgenommen werden. Auf diese Weise wird die bei der Verbrennung herrschende Temperatur, welche einen wesentlichen Parameter für die entstehende Schadstoffmenge darstellt, gesteuert. Bei der Verbrennung eines fossilen Brennstoffes ist bekannt, daß eine leichte Absenkung der bei der Verbrennung herrschenden Temperatur eine drastische Abnahme der entstehenden Stickstoffmenge zur Folge hat. Bei einem Verbrennungsmotor kann insbesondere durch eine Einstellung des der Verbrennung zugeführten Brennstoff/Luft-Gemisches eine Änderung der Verbrennungstemperatur erreicht werden, ohne daß es hierbei zu einer Leistungsabnahme kommt. Die Einstellung des Brennstoff/Luft-Gemisches kann bei einem Verbrennungsmotor leicht mechanisch über eine in der Luftansaugung befindliche Drosselklappe vorgenommen werden. Auch ist eine direkte Einstellung des Brennstoff/Luft-Gemisches auf elektronischem oder mechanischem Wege über einen Vergaser möglich.

Vorteilhafterweise erfolgt bei einem Verbrennungsmotor die Steuerung der Verbrennung durch Beeinflussung des Zündzeitpunktes und/oder des Zufuhr- oder Einspritzzeitpunktes des Brennstoffes. Auf diese Weise läßt sich der Verbrennungsbeginn zeitlich verschieben. Üblicherweise liegt der Verbrennungsbeginn vor dem sogenannten oberen Todpunkt, d.h. den oberen Umkehrpunkt des Kolbens. Wird der Verbrennungsbeginn zeitlich nach vorne geschoben, so findet die Verbrennung in einem Bereich der Kompression, d.h. bei einer relativ hohen Temperatur und einem relativ hohen Druck statt, was zur Folge hat, daß in hohem Maße Stickoxide erzeugt werden. Wird dagegen der Verbrennungsbeginn zeitlich nach hinten verschoben, so findet die Verbrennung in einem Bereich der Expansion statt, d.h. bei einer relativ niedrigen Temperatur und einem relativ niedrigen Druck. Es werden verhältnismäßig wenig Stickoxide erzeugt. Bei modernen Motoren mit einer Einspritzausrüstung ist eine derartige Steuerung ohne Einbußen an Leistung und unter Beibehaltung bzw. einer Verbesserung des Brennstoffverbrauches möglich. Bei einem selbstzündenden Dieselmotor kann die Einstellung des Verbrennungszeitpunktes allein über die Einstellung des Zufuhr- oder Einspritzzeitpunktes des Brennstoffes geschehen. Bei einem Otto-Motor kann hingegen die Steuerung der Verbrennung durch Beeinflussung des Zündzeitpunktes geschehen.

Für die Auslegung der Dosiervorrichtung zur Einbringung des für die Katalyse notwendigen Fluids in das Abgas ist es vorteilhaft, wenn für den Massenstrom des Schadstoffes in dem Abgas ein konstanter Sollwert vorgegeben wird. In diesem Fall kann die Dosiereinrichtung besonders einfach, nämlich lediglich für einen schmalen Durchsatzbereich ausgelegt werden. Auf diese Weise ist eine billige Serienfertigung der Dosiereinrichtung möglich. Eine derartige Regelung ist ohne weiteres z.B. bei modernen Motoren mit elektronischem Motormanagement möglich.

Für eine Verbrennungsanlage, für welche aufgrund der baulichen Konstruktion oder sonstiger Randbedingungen der Massenstrom eines Schadstoffs nicht entsprechend einem konstanten Sollwert gesteuert werden kann, ist es vorteilhaft, wenn für den Massenstrom ein Sollwert vorgegeben wird, welcher eine lineare Abhängigkeit zu einer den Betriebszustand der Verbrennungsanlage charakterisierenden Größe aufweist. Eine solche den Betriebszustand charakterisierende Größe kann beispielsweise die Last oder bei einem Verbrennungsmotor die Motordrehzahl sein. Da bei einer Verbrennungsanlage mit ungeregeltem Massenstrom des zu beseitigenden Schadstoffes eine kleine Änderung einer den Betriebszustand charakterisierenden Größe, z.B. der Temperatur, eine große Änderung des Massenstroms zur Folge haben kann, stellt eine Regelung mit linear angepaßtem Sollwert bereits eine wesentliche Verbesserung hinsichtlich der Auslegung der Dosiervorrichtung dar. Es ist auch vorstellbar, daß für den Massenstrom des zu beseitigenden Schadstoffes ein Sollwert vorgegeben wird, welcher zu mehreren den Betriebszustand der Verbrennungsanlage charakterisierenden Größen eine lineare Abhängigkeit aufweist.

Die Aufgabe bezüglich der Abgasreinigungseinrichtung wird erfindungsgemäß gelöst durch eine Einrichtung für die katalytische Beseitigung eines Schadstoffes aus einem Abgas einer Verbrennungsanlage mit einem Abgaskanal zur Führung des Abgases, einer Einrichtung zur Zudosierung eines Fluids in das Abgas und einem in den Abgaskanal eingebauten Katalysator zur Umsetzung des Schadstoffes mit dem Fluid, wobei eine Einrichtung zur Bestimmung des Massenstroms des zu beseitigenden Schadstoffes und eine mit der Einrichtung zur Zudosierung des Fluids und der Einrichtung zur Bestimmung des Massenstroms verbundene und an die Verbrennungsanlage über eine Steuerleitung anschließbare Kontrolleinheit umfaßt sind, und die Kontrolleinheit zur Regelung des Massenstroms, zur Steuerung der Verbrennung der Verbrennungsanlage entsprechend und zur Zudosierung des Fluids entsprechend dem Massenstrom vorgesehen ist.

Vorteilhafterweise ist die Einrichtung zur Bestimmung des Massenstromes des Schadstoffes als eine in den Abgaskanal in Strömungsrichtung des Abgases vor dem Katalysator angeordnete Meßeinrichtung zur Messung des Massenstromes ausgebildet. Es ist aber auch möglich, ein Kennfeld in einem elektronischen Speicher abzulegen, aus welchem Kennfeld der Massenstrom des Schadstoffes in Abhängigkeit vom jeweiligen Betriebszustand der Verbrennungsanlage entnommen werden kann. In diesem Fall umfaßt die Einrichtung zur Bestimmung des Massenstromes eine Einrichtung zur Erfassung des Betriebszustandes, beispielsweise durch eine Messung betriebsrelevanter Parameter wie Last oder Brennstoffverbrauch, den genannten elektronischen Speicher sowie eine Rechnereinheit zum Auslesen des Kennfeldes aus dem Speicher.

Eine derartige Abgasreinigungseinrichtung kann direkt an eine vorhandene Abgasleitung einer Verbrennungsanlage angeschlossen oder direkt in die Abgasleitung integriert werden.

Zum Abspeichern der ermittelten Meßwerte des Schadstoffmassenstromes kann die Kontrolleinheit mit einem elektronischen Speicher versehen sein. In einem derartigen Speicher kann der Sollwert für den Massenstrom oder im Falle des linear abhängigen Sollwertes eine vorgegebene Kennlinie oder ein vorgegebenes Kennfeld zur Berechnung des Sollwertes aus einer bzw. mehreren den Betriebszustand der Verbrennungsanlage charakterisierenden Größen abgelegt sein. Zur Steuerung der Verbrennungsanlage kann die Kontrolleinheit ferner mit einem Mikrochip ausgestattet sein, welcher aus der Differenz zwischen dem gemessenen Istwert des Massenstroms und dem zu regelnden Sollwert ein entsprechendes Steuersignal für die Verbrennungsanlage errechnet oder einer gespeicherten Datei entnimmt. Entsprechend dem geregelten Sollwert eignet sich die Kontrolleinheit weiter dazu, eine entsprechende Menge des für die katalytische Beseitigung des Schadstoffes erforderlichen Fluids in das Abgas einzudosieren.

Die Steuerleitung umfaßt vorzugsweise ein Kopplungsglied zum Anschluß an die Verbrennungsanlage und zum Einstellen einer der Verbrennung zuführbaren Luftmenge und/oder Brennstoffmenge.

Für die Reinigung eines Abgases eines Verbrennungsmotors, dessen Verbrennung bekanntermaßen zyklisch abläuft, ist es vorteilhaft, wenn die Steuerleitung ein Kopplungsglied zum Anschluß an den Verbrennungsmotor und zum Beeinflussen eines Zündzeitpunktes und/oder eines Zufuhrzeitpunktes des Brennstoffes umfaßt. Ein derartiges Kopplungsglied kann beispielsweise als ein elektronisches Steuerkabel ausgebildet sein, welches bei modernen Verbrennungsmotoren direkt mit einer vorhandenen elektronischen Einspritzausrüstung gekoppelt werden kann.

Bezüglich der Verbrennungsanlage wird die Aufgabe erfindungsgemäß gelöst durch eine Verbrennungsanlage, insbesondere durch einen Verbrennungsmotor, welche bzw. welcher mit einer Einrichtung zur katalytischen Beseitigung eines im Abgas enthaltenen Schadstoffes mit den Merkmalen gemäß einem der Ansprüche 6 bis 8 versehen ist.

Ausführungsbeispiele der Erfindung werden anhand einer Zeichnung näher erläutert.

Dabei zeigen:
- FIG 1: ein erstes Ablaufdiagramm für die Regelung des Massenstroms eines Schadstoffes einer Verbrennungsanlage;
- FIG 2: ein zweites Ablaufdiagramm für die Regelung des Massenstroms eines Schadstoffes einer Verbrennungsänlage;
- FIG 3: einen Dieselmotor mit einer angeschlossenen Einrichtung zur katalytischen Entfernung der Stickoxide aus dem Abgas, wobei der Massenstrom der Stickoxide geregelt wird;
- FIG 4: den Verlauf des Massenstroms der Stickoxide im Abgas eines Verbrennungsmotors als Funktion der Drehzahl und der Last in ungeregeltem Zustand;
- FIG 5: den Verlauf des Massenstroms der Stickoxide im Abgas eines Verbrennungsmotors als Funktion der Drehzahl und der Last mit Regelung auf einen konstanten Sollwert;
- FIG 6: den Verlauf des Massenstroms der Stickoxide im Abgas eines Verbrennungsmotors als Funktion der Last und der Drehzahl mit Regelung auf einen zur Last linearen Sollwert, und
- FIG 7: den Verlauf des Massenstroms der Stickoxide im Abgas eines Verbrennungsmotors als Funktion der Drehzahl und der Last mit Regelung auf einen zur Last und zur Drehzahl linearen Sollwert.

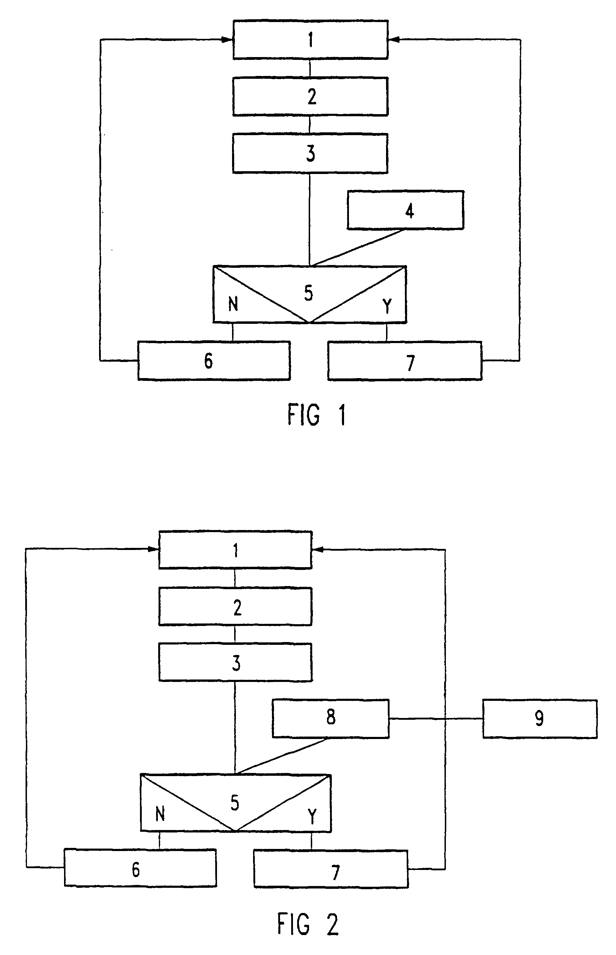

Figur 1 erklärt mit Hilfe eines Ablaufdiagramms ein Verfahren zur Regelung des Massenstroms eines Schadstoffes einer Verbrennungsanlage auf einen konstanten Sollwert. In einem ersten Verfahrensschritt 1 werden über eine Meßeinrichtung, die z.B. mit Sensoren zur Messung der Schadstoffkonzentration und zur Messung der Strömungsgeschwindigkeit des Abgases ausgestattet ist, die Daten zur Berechnung des Massenstromes des Schadstoffes erfaßt. Aus den erfaßten Daten kann nun im Verfahrensschritt 2 der Massenstrom berechnet werden. Ebenso ist es möglich, ein Kennfeld in einem elektronischen Speicher abzulegen, aus welchem Kennfeld der Massenstrom des Schadstoffes in Abhängigkeit vom jeweiligen Betriebszustand der Verbrennungsanlage entnommen werden kann. Im Falle eines Verbrennungsmotors läßt sich ein derartiges Kennfeld beispielsweise durch eine gleichzeitige Messung von den Betriebszustand des Verbrennungsmotors charakterisierenden Parametern wie Drehzahl, Last (Drehmoment), Ladelufttemperatur, Ladedruck oder Kraftstoffverbrauch und des Massenstroms des Schadstoffes auf einem Prüfstand ermitteln. Der Massenstrom kann aber auch aus den genannten Parametern und der Konzentration des Schadstoffes in dem Abgas des Verbrennungsmotors genähert werden. Im Falle der Verwendung eines Kennfeldes wird im Verfahrensschritt 1 mindestens ein den Betriebszustand der Verbrennungsanlage charakterisierender Parameter gemessen und im Verfahrensschritt 2 daraus mit Hilfe des Kennfeldes der Wert des Massenstroms des Schadstoffes ermittelt. Der berechnete Wert des Massenstroms wird im Verfahrensschritt 3 als Istwert abgespeichert.

Im Verfahrensschritt 4 wird der entsprechend der Verbrennungsanlage vorgegebene und beispielsweise in einem Speicher implementierte Sollwert für den Massenstrom abgerufen. Der erfaßte und abgespeicherte Istwert des Massenstroms wird anschließend in dem Verfahrensschritt 5 mit dem abgerufenen Sollwert des Massenstroms verglichen. Ist die Differenz zwischen dem gemessenen Istwert und dem gespeicherten Sollwert kleiner als ein vorgegebener Toleranzwert, so wird die Entscheidung Y getroffen und entsprechend dem Verfahrensschritt 7 eine dem vorgegebenen Sollwert des Massenstroms des Schadstoffes entsprechende Menge eines mit dem Schadstoff an dem Katalysator reagierenden Fluids dem Abgas zudosiert. Anschließend werden die Schritte 1 bis 7 wiederholt. Ist die Differenz zwischen dem Istwert und dem Sollwert des Massenstroms größer als der vorgegebene Toleranzwert, so wird die Entscheidung N getroffen und im folgenden Verfahrensschritt 6 ein entsprechendes Steuersignal an die Verbrennungsanlage gesendet, um den Wert des Massenstroms zu korrigieren. Ein solches Steuersignal kann beispielsweise ein elektronisches Signal sein, welches direkt an einer elektronischen Einspritzausrüstung eines Verbrennungsmotors ansetzt und beispielsweise den Zünd- oder Einspritzzeitpunkt verändert. Das gesamte Verfahren kann sowohl diskret als auch kontinuierlich ablaufen.

Figur 2 bezieht sich auf ein Verfahren zur Regelung des Massenstroms des zu beseitigenden Schadstoffes auf einen Sollwert, welcher eine lineare Abhängigkeit zu einer den Betriebszustand der Verbrennungsanlage charakterisierenden Größe aufweist. Eine derartige, den Betriebszustand charakterisierende Größe kann beispielsweise die Drehzahl, der Regelstangenweg oder die Last eines Verbrennungsmotors sein. Auch sind andere Größen vorstellbar. Im Vergleich zu dem in Figur 1 dargestellten Verfahren unterscheidet sich das in Figur 2 dargestellte Verfahren lediglich dadurch, daß der Verfahrensschritt 4, d.h. der Abruf eines vorgegebenen Sollwerts, entfällt und durch die Verfahrensschritte 8 und 9 ersetzt wird. In dem Verfahrensschritt 9 wird zur Bestimmung des Sollwerts des Massenstroms des Schadstoffes eine oder mehrere den Betriebszustand charakterisierende Größen, z.B. durch Messung erfaßt. In dem Verfahrensschritt 8 wird entsprechend einer vorgegebenen und beispielsweise in einem elektronischen Speicher abgelegten Kennlinie bzw. eines Kennfeldes der zu regelnde Sollwert des Massenstromes errechnet. Über diesen jeweils dem aktuellen Betriebszustand angepaßten Sollwert des Massenstromes erfolgt dann, wie für Figur 1 bereits beschrieben, in dem Verfahrensschritt 5 der Vergleich zwischen dem gemessenen Istwert und dem vorgegebenen Sollwert des Massenstromes.

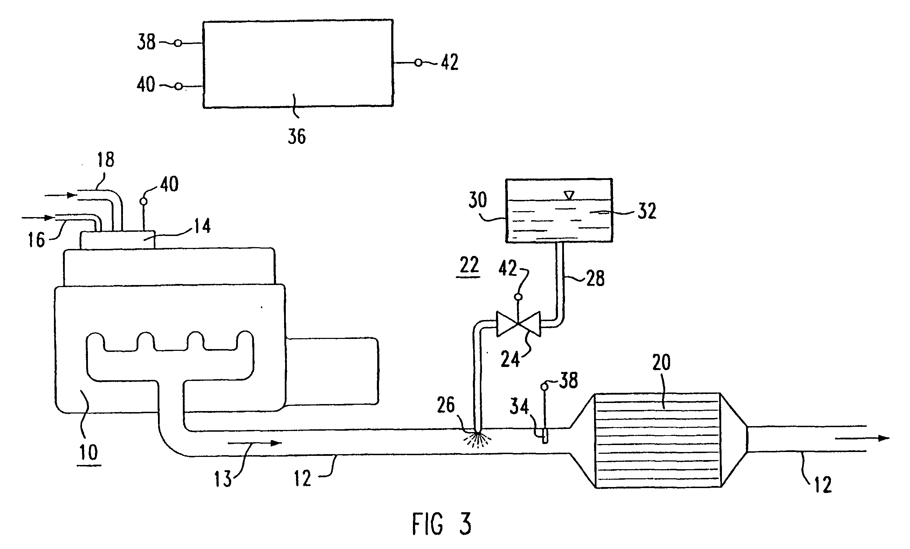

Figur 3 zeigt als eine Verbrennungsanlage 10 einen Dieselmotor, welcher mit einer Abgasreinigungseinrichtung zur Beseitigung von Stickoxiden unter Regelung des Massenstromes der Stickoxide auf einen konstanten Sollwert versehen ist. Der Dieselmotor verfügt über eine elektronische Einspritzausrüstung 14 mit einer Brennstoff-Zuführung 16 und einer Luftansaugung 18. Das bei der Kraftstoffverbrennung in dem Dieselmotor entstehende Abgas 13 wird über einen Abgaskanal 12 und über einen in den Abgaskanal 12 integrierten Katalysator 20 nach außen geführt. Hierbei ist der Katalysator 20 als ein sogenannter DeNOx-Katalysator ausgebildet, welcher nach dem bekannten SCR-Verfahren Stickoxide mit Hilfe eines Reduktionsmittels wie Ammoniak zu molekularem Stickstoff und Wasser zersetzt. Die benötigte Menge an Ammoniak wird durch eine Hydrolyse aus zudosiertem Harnstoff gewonnen. Der Harnstoff entspricht in diesem Fall dem zur Schadstoffbeseitigung erforderlichen und zusätzlich in das Abgas 13 einzubringenden Fluid 32, welches mit dem Schadstoff chemisch reagiert.

Für die Dosierung von Harnstoff ist eine Dosiereinrichtung 22 vorgesehen, welche einen Vorratsbehälter 30, eine Zufuhrleitung 28, ein Dosierventil 24 und eine Einspritzdüse 26 umfaßt. Das Dosierventil 24 ist über den Anschluß 42 elektronisch ansteuerbar. Für die Hydrolyse des Harnstoffs kann zusätzlich in dem Abgaskanal 12 hinter der Einspritzdüse 26 ein nicht eingezeichneter Hydrolyse-Katalysator vorgesehen sein. In dem Abgaskanal 12 des Dieselmotors 10 befindet sich weiter eine Meßeinrichtung 34 zur Erfassung des Massenstromes der Stickoxide. Diese Meßeinrichtung umfaßt Sensoren zur Ermittlung der Konzentration der Stickoxide und zur Bestimmung der Strömungsgeschwindigkeit des Abgases. Über den Anschluß 38 können die von der Meßeinrichtung 34 gemessenen Daten zur Berechnung des Massenstroms der Stickoxide erfaßt werden.

Zur Regelung des Massenstroms der Stickoxide ist eine Kontrolleinheit 36 vorgesehen, welche über den Anschluß 38 die über die Meßeinrichtung 34 aufgenommenen Daten erfaßt und daraus den Massenstrom der Stickoxide errechnet. Über den Anschluß 40 ist die Kontrolleinheit weiter zur Steuerung der Verbrennung mit der elektronischen Einspritzausrüstung 14 des Dieselmotors verbunden.

Liegt der berechnete Istwert des Massenstroms der Stickoxide außerhalb eines vorgegebenen Toleranzbereiches und oberhalb des vorgegebenen Sollwerts für den Massenstrom der Stickoxide, so wird über den Anschluß 40 mit Hilfe eines elektronischen Steuersignals der Einspritzzeitpunkt des Dieselmotors in den Bereich der Expansion, d.h. zeitlich nach hinten geschoben. Auf diese Weise wird die ausgestoßene Stickoxidmenge infolge des verringerten Druckes und der erniedrigten Temperatur verkleinert. Entsprechend umgekehrt wird der Einspritzzeitpunkt zeitlich nach vorne geschoben, wenn der Istwert des Massenstroms der Stickoxide außerhalb des vorgegebenen Toleranzbereiches aber unterhalb des vorgegebenen Sollwerts liegt. Das beschriebene Regelverfahren ist bei einem modernen Dieselmotor mit Einspritzausrüstung ohne jedwede Leistungseinbuße und ohne einen höheren Verbrauch an Kraftstoff möglich.

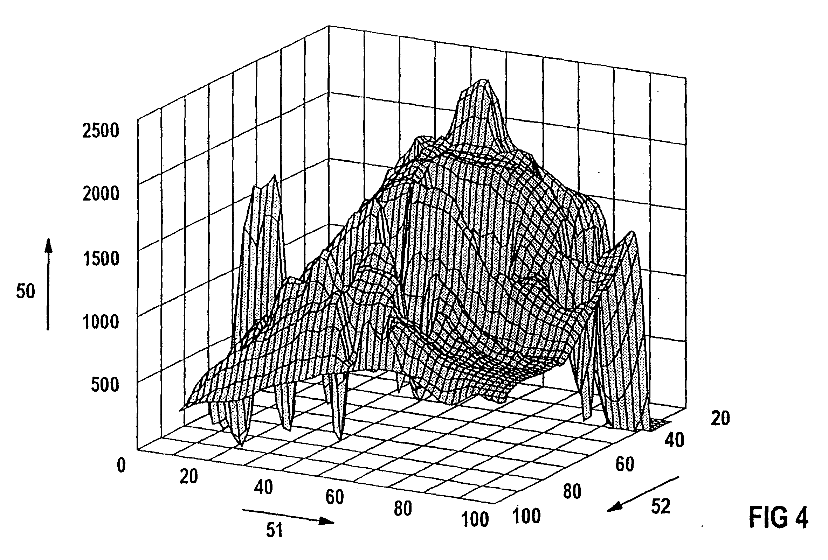

In den Figuren 4 bis 7 ist jeweils der Massenstrom 50 der Stickoxide im Abgas eines Verbrennungsmotors als Funktion der Drehzahl 51 und der Last 52 des Verbrennungsmotors gezeigt. Der Massenstrom 50 ist dabei in g/h, Drehzahl 51 und Last 52 jeweils in % des Auslegungswertes aufgetragen. Wird der Massenstrom 50 gemäß Figur 4 nicht geregelt, so wird ersichtlich, daß ein Verfahren nur schwer technisch realisierbar ist, mit dessen Hilfe ein Fluid entsprechend dem ungeregelten Massenstrom der Stickoxide dem Abgas zudosiert werden soll. Aufgrund der hohen Schwankungsbreite des Massenstroms 50 muß hierzu nämlich die Dosiervorrichtung zur dosierten Einbringung des Fluids in den Abgasstrom hochdynamisch und in weiten Betriebsbereichen des Verbrennungsmotors genau arbeitend ausgelegt sein. Eine entsprechend Drehzahl 51 oder Last 52 erfolgende Dosierung des Fluids kann zudem nicht genau auf den Massenstrom 50 ausgerichtet sein, da eine kleine Änderung der Drehzahl 51 oder der Last 52 eine große Änderung des Massenstroms 50 zur Folge haben kann.

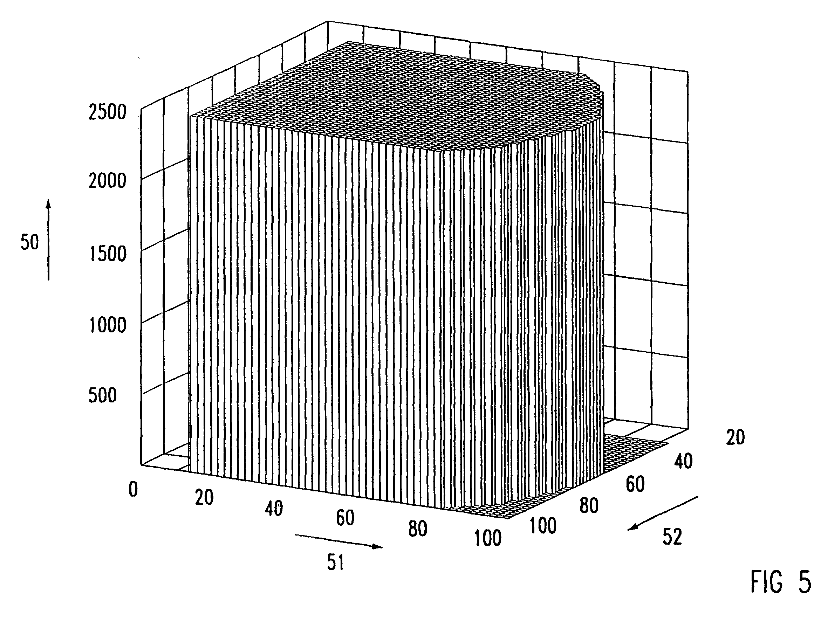

In Figur 5 ist dagegen der Massenstrom 50 des erwähnten Schadstoffes durch Steuerung der Verbrennung der Verbrennungsanlage auf einen konstanten Sollwert geregelt. Unabhängig von der Drehzahl 51 und der Last 52 bleibt der Massenstrom des Schadstoffes annähernd konstant. Es wird klar ersichtlich, daß bei einer derartigen Regelung, welche sich technisch für einen Verbrennungsmotor mit Einspritzausrüstung verhältnismäßig einfach realisieren läßt, die Dosiereinrichtung zur Einbringung des Fluids nur für einen kleinen Durchsatzbereich und daher kostengünstig ausgelegt werden kann. Die Herstellung einer derartigen Dosiervorrichtung ist in billiger Serienfertigung möglich.

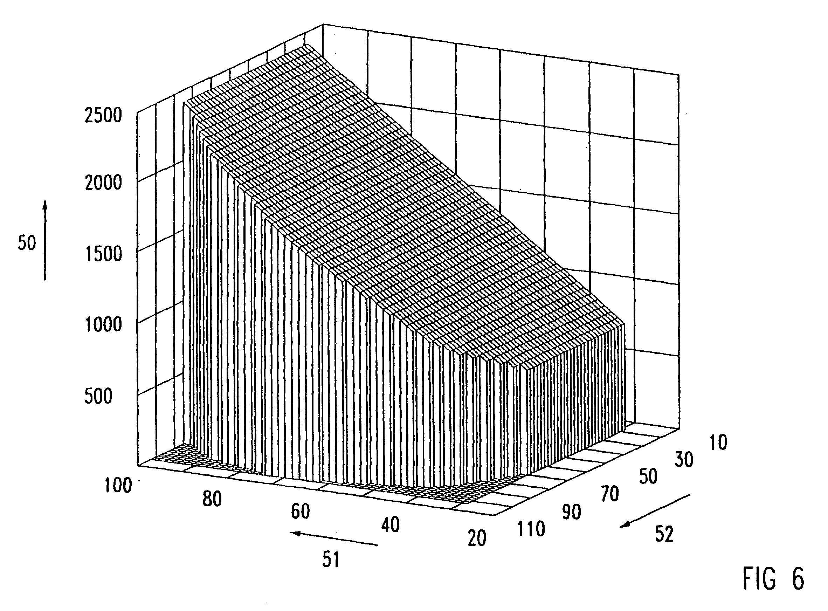

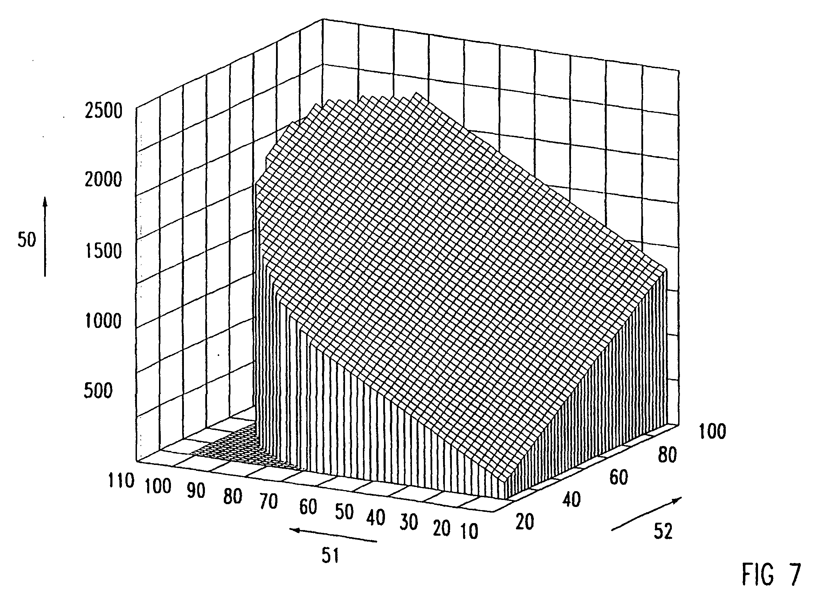

Falls ein Verbrennungsmotor aufgrund seiner baulichen Gegebenheiten nicht derart gesteuert werden kann, daß eine Regelung des Massenstroms 50 der Stickoxide auf einen konstanten Sollwert möglich ist, so kann der Massenstrom 50 auf einen Sollwert geregelt werden, welcher eine einfache lineare Abhängigkeit von einer oder mehreren den Betriebszustand charakterisierenden Größen aufweist. Dies ist in der Regel auch für ältere Motoren möglich. In Figur 6 ist beispielsweise eine Regelung des Massenstroms 50 auf einen Sollwert gezeigt, welcher eine lineare Abhängigkeit zur Last 51 des Verbrennungsmotors aufweist. In Figur 7 ist eine Regelung des Massenstroms 50 auf einen Sollwert gezeigt, wobei der Sollwert eine lineare Abhängigkeit zu der Drehzahl 51 und zu der Last 52 aufweist. Auch in den beiden gezeigten Fällen kann die Dosiereinrichtung wesentlich kostengünstiger ausgeführt werden, als dies für die Dosierung eines Fluids entsprechend einem ungeregelten Massenstrom nötig wäre. Auch läßt sich eine hohe Dosiergenauigkeit erreichen, da eine Änderung der Drehzahl 51 oder der Last 52 aufgrund des linearen Zusammenhangs eine Änderung des Massenstroms 50 um den gleichen Faktor zur Folge hat.

## Patentansprüche

1. Verfahren zur Steuerung einer Verbrennungsanlage (10) und zur katalytischen Beseitigung eines in der Verbrennungsanlage (10) erzeugten Schadstoffes im Abgas (13), durch Zudosieren eines Fluids (32) in das Abgas (13),
**dadurch gekennzeichnet, daß** die Verbrennung in der Verbrennungsanlage (10) so gesteuert wird, daß sich ein konstanter oder ein linear von einer oder mehreren den Betriebszustand charakterisierenden Größen abhängiger Sollwert für den Massenstrom des Schadstoffes einstellt, und daß das Fluid (32) entsprechend dem Sollwert für den Massenstrom (50) des Schadstoffes in das Abgas (13) zudosiert wird.

2. Verfahren nach Anspruch 1,
**dadurch gekennzeichnet, daß** die Steuerung der Verbrennung durch Beeinflussung einer der Verbrennung zugeführten Luftmenge und/oder Brennstoffmenge geschieht.

3. Verfahren nach Anspruch 1,
**dadurch gekennzeichnet, daß** die Verbrennung eines Verbrennungsmotors gesteuert wird durch Beeinflussung eines Zündzeitpunktes und/oder eines Zufuhrzeitpunktes eines Brennstoffes.

4. Einrichtung für die Steuerung einer Verbrennungsanlage (10) und für die katalytische Beseitigung eines Schadstoffes aus einem Abgas (13) der Verbrennungsanlage (10) mit einem Abgaskanal (12)zum Führen des Abgases (13), einer Einrichtung (22) zur Zudosierung eines Fluids (32) in das Abgas (13) und einem in den Abgaskanal (12) eingebauten Katalysator (20) zur Umsetzung des Schadstoffs mit dem Fluid (32), **gekennzeichnet durch** eine Einrichtung (34) zur Bestimmung des Massenstromes (50) des Schadstoffes und eine Kontrolleinheit (36) zur Bildung eines konstanten oder linear von-einer oder mehreren den Betriebszustand der Verbrennungsanlage charakterisierenden Größe abhängigen Sollwerts für den Massenstrom (50) des Schadstoffs, wobei die Kontrolleinheit (36) mit der Einrichtung (22) zur Zudosierung des Fluids (32) und mit der Einrichtung (34) zur Bestimmung des Massenstromes (50) verbunden ist, einen Anschluß (40) für eine Steuerleitung zur Verbrennungsanlage (10) aufweist und zur Regelung des Massenstroms (50), zur Steuerung der Verbrennung der Verbrennungsanlage (10) entsprechend dem Sollwert für den Massenstrom (50) und zur Zudosierung des Fluids (32) entsprechend dem Massenstrom (50) vorgesehen ist.

5. Einrichtung nach Anspruch 4,
**dadurch gekennzeichnet, daß** die Einrichtung (34) zur Bestimmung des Massenstroms (50) als eine in dem Abgaskanal (12) in Strömungsrichtung des Abgases (13) vor dem Katalysator (20) angeordnete Meßeinrichtung ausgebildet ist.

6. Einrichtung nach Anspruch 4 oder 5,
**dadurch gekennzeichnet, daß** über die Steuerleitung eine der Verbrennung zuführbare Luftmenge und/oder Brennstoffmenge einstellbar ist.

7. Einrichtung nach Anspruch 4 oder 5,
**dadurch gekennzeichnet, daß** über die Steuerleitung ein Zündzeitpunkt und/oder ein Zufuhrzeitpunktes des Brennstoffes beeinflußbar ist.

8. Verbrennungsanlage (10), insbesondere Verbrennungsmotor, mit einer Einrichtung für die Steuerung der Verbrennungsanlage und für die katalytische Beseitigung eines im Abgas (13) enthaltenen Schadstoffes gemäß einem der Ansprüche 4 bis 7.

9. Einrichtung nach Anspruch 6 oder 7,
**dadurch gekennzeichnet, daß** die Steuerleitung ein Kopplungsglied (40) zum Anschluß an einen Verbrennungsmotor und zum Beeinflussen eines Zündzeitpunktes und/oder eines Zufuhrzeitpunktes des Brennstoffes umfaßt.

10. Verbrennungsanlage (10), insbesondere Verbrennungsmotor, mit einer Einrichtung für die katalytische Beseitigung eines im Abgas (13) enthaltenen Schadstoffes gemäß einem der Ansprüche 6 bis 9.

## Claims

1. Method for controlling a combustion system (10) and for the catalytic removal of a noxious substance, generated in the combustion system (10), in the exhaust gas (13), by the metered addition of a fluid (32) to the exhaust gas (13), **characterized in that** the combustion in the combustion system (10) is controlled in such a manner that a desired value for the mass flow rate of the noxious substance is set, said desired value being constant or linearly dependent on one or more variables characterizing the operating state, and **in that** the fluid (32) is added to the exhaust gas (13) in a metered fashion in accordance with the desired value for the mass flow rate (50) of the noxious substance.

2. Method according to Claim 1, **characterized in that** the control of the combustion is effected by influencing an air quantity and/or fuel quantity fed to the combustion.

3. Method according to Claim 1, **characterized in that** the combustion of an internal combustion engine is controlled by influencing an ignition time and/or a feed time of a fuel.

4. Device for controlling a combustion system (10) and for the catalytic removal of a noxious substance from an exhaust gas (13) of the combustion system (10), having an exhaust gas duct (12) for conducting the exhaust gas (13), a device (22) for the metered addition of a fluid (32) to the exhaust gas (13), and a catalytic converter (20), installed in the exhaust gas duct (12), for converting the noxious substance using the fluid (32), **characterized by** a device (34) for determining the mass flow rate (50) of the noxious substance and a control unit (36) for forming a desired value for the mass flow rate (50) of the noxious substance, said desired value being constant or linearly dependent on one or more variables characterizing the operating state of the combustion system, the control unit (36) being connected to the device (22) for the metered addition of the fluid (32) and to the device (34) for determining the mass flow rate (50), having a connection (40) for a control line to the combustion system (10) and being provided to regulate the mass flow rate (50), to control the combustion of the combustion system (10) in accordance with the desired value for the mass flow rate (50), and to add the fluid (32) in a metered fashion in accordance with the mass flow rate (50).

5. Device according to Claim 4, **characterized in that** the device (34) for determining the mass flow rate (50) is configured as a measuring device which is arranged in the exhaust gas duct (12) upstream of the catalytic converter (20) in the direction of flow of the exhaust gas (13).

6. Device according to Claim 4 or 5, **characterized in that** an air quantity and/or fuel quantity which can be fed to the combustion can be adjusted via. the control line.

7. Device according to Claim 4 or 5, **characterized in that** an ignition time and/or a feed time of the fuel can be influenced via the control line.

8. Combustion system (10), in particular internal combustion engine, having a device for controlling the combustion system and for the catalytic removal of a noxious substance, contained in the exhaust gas (13), in accordance with one of Claims 4 to 7.

9. Device according to Claim 6 or 7, **characterized in that** the control line comprises a coupling element (40) for connecting to an internal combustion engine and for influencing an ignition time and/or a feed time of the fuel.

10. Combustion system (10), in particular internal combustion engine, having a device for the catalytic removal of a noxious substance, contained in the exhaust gas (13), in accordance with one of Claims 6 to 9.

## Revendications

1. Procédé de commande d'un système (10) de combustion et d'élimination catalytique d'une substance polluante des gaz (13) d'échappement produite dans le système (10) de combustion, par addition de manière dosée d'un fluide (32) aux gaz (13) d'échappement, **caractérisé en ce qu'**il consiste à commander la combustion dans le système (10) de combustion de manière à ce qu'il s'établisse une valeur de consigne du courant massique de la substance polluante, constante ou dépendant linéairement d'une ou de plusieurs grandeurs caractérisant l'état de fonctionnement et à ajouter le fluide de manière dosée aux gaz (13) d'échappement en fonction de la valeur de consigne du courant (50) massique de la substance polluante.

2. Procédé suivant la revendication 1, **caractérisé en ce que** la commande de la combustion s'effectue en influençant une quantité d'air et/ou une quantité de combustible apportée à la combustion.

3. Procédé suivant la revendication 1, **caractérisé en ce qu'**il consiste à commander la combustion d'un moteur à combustion interne en influençant un instant d'allumage et/ou un instant d'alimentation en un carburant.

4. Dispositif de commande d'un système (10) de combustion et d'élimination catalytique d'une substance polluante des gaz (13) d'échappement du système (10) de combustion, comprenant un canal (12) de passage des gaz (13) d'échappement, un dispositif (22) d'addition dosée d'un fluide (32) dans les gaz (13) d'échappement et un pot (20) catalytique monté dans le canal (12) pour les gaz d'échappement en vue de faire réagir la substance polluante sur le fluide (32)
**caractérisé par** un dispositif (34) de détermination du courant (50) massique de la substance polluante et par une unité (36) de contrôle destinée à former une valeur de consigne du courant (50) massique de la substance polluante constante ou dépendant linéairement d'une ou de plusieurs grandeurs caractérisant l'état de fonctionnement du système de combustion, l'unité (36) de contrôle étant reliée au dispositif (22) d'addition dosée du fluide (32) et au dispositif (34) de détermination du courant (50) massique, comportant un raccordement (40) pour une ligne de commande allant au système (10) de combustion et étant prévue pour la régulation du courant (50) massique pour la commande de la combustion du système (10) de combustion en fonction de la valeur de consigne du courant (50) massique et pour l'addition dosée du fluide (32) en fonction du courant (50) massique.

5. Dispositif suivant la revendication 4, **caractérisé en ce que** le dispositif (34) de détermination du courant (50) massique est constitué sous la forme d'un dispositif de mesure monté dans le canal (12) pour les gaz d'échappement dans le sens de passage des gaz (13) d'échappement en amont du pot (20) catalytique.

6. Dispositif suivant la revendication 4 ou 5, **caractérisé en ce qu'**une quantité d'air et/ou une quantité de carburant d'alimentation de la combustion peut être réglée par la ligne de commande.

7. Dispositif suivant la revendication 4 ou 5, **caractérisé en ce qu'**un instant d'allumage et/ou un instant d'alimentation en carburant peut être influencé par la ligne de commande.

8. Système (10) de combustion, notamment moteur à combustion comprenant un dispositif de commande du système de combustion et d'élimination catalytique d'une substance polluante contenue dans les gaz (13) d'échappement suivant l'une des revendications 4 à 7.

9. Dispositif suivant la revendication 6 ou 7, **caractérisé en ce que** la ligne de commande comprend un élément (40) de couplage destiné à se raccorder à un moteur à combustion interne et à influencer un instant d'allumage et/ou un instant d'alimentation en le carburant.

10. Système (10) de combustion, notamment moteur à combustion comprenant un dispositif d'élimination catalytique d'une substance polluante contenue dans les gaz (13) d'échappement suivant l'une des revendications 6 à 9.
